# EUROPÄISCHE PATENTSCHRIFT

(11) **EP 0 538 649 B1**
(45) Veröffentlichungstag und Bekanntmachung des Hinweises auf die Patenterteilung: **12.06.1996**
(21) Anmeldenummer: 92116542.9
(22) Anmeldetag: 28.09.1992
(51) Int. Cl.: C08G 18/08, C08G 18/28, C08G 18/32, C08G 18/44, C08G 18/73, C08G 18/75, C08G 18/10, C08G 18/78, C08G 18/79

(54) **Modifizierte Polyharnstoffe**
Modified polyureas
Polyurées modifiées

(30) Priorität: 10.10.1991 DE 4133572
(43) Veröffentlichungstag der Anmeldung: 28.04.1993
(73) Patentinhaber: BAYER AG, 51368 Leverkusen (DE)
(72) Erfinder: Münzmay, Thomas, Dr., W-4047 Dormagen (DE); Hassel, Tillmann, Dr., W-5000 Köln 80 (DE)

(56) Entgegenhaltungen:
- EP-A- 0 043 651
- EP-A- 0 185 184
- EP-A- 0 312 836
- DE-A- 3 600 595
- FR-A- 1 361 664

## Beschreibung

Die Erfindung betrifft neue, durch neutralisierte N-Cyanaminocarbonylharnstoffgruppen modifizierte Polyharnstoffe, ein Verfahren zu ihrer Herstellung und ihre Verwendung als Bindemittel für Beschichtungen. Der Begriff "Polyharnstoffe" umfaßt im Sinne der Erfindung auch Polyurethanharnstoffe.

Wäßrige Lösungen oder Dispersionen von anionisch modifizierten Polyisocyanat-Additionsprodukten, insbesondere wäßrige Dispersionen von anionisch modifizierten Polyurethanen bzw. Polyurethanharnstoffen und ihre Verwendung zur Herstellung von Überzügen sind bereits bekannt [vergl. z.B. DE-PS 1 184 946, DE-PS 1 178 586, DE-AS 1 237 306, DE-OS 1 495 745. DE-OS 1 595 602, DE-OS 1 770 068, DE-OS 2 019 324, DE-OS 2 314 512 oder auch Angew. Chem. 82, 53 (1970)].

Die Dispergierbarkeit der in diesen Dispersionen vorliegenden Polyisocyanat-Polyadditionsprodukten beruht auf der Anwesenheit von eingebauten ionischen Zentren, insbesondere von eingebauten Sulfonat- oder Carboxylatgruppen. Bei der Herstellung von Beschichtungen aus diesen Dispersionen verbleiben im allgemeinen die ionischen Zentren in den resultierenden Beschichtungen, was eine Verminderung der Wasserresistenz der resultierenden Beschichtung zur Folge hat.

Weiterhin sind in Wasser dispergierbare Polyisocyanat-Additionsprodukte bekannt, die durch anionische Cyanharnstoffgruppen modifiziert sind (vergl. DE-OS 3 441 934; 3 600 595; 3 735198 und 3 813 840). Aus derartigen Dispersionen erhaltene Beschichtungen sind wesentlich wasserresistenter als aus üblichen PUR-Dispersionen erhaltene Beschichtungen, weil die hydrophilierende Cyanharnstoffanionen nach Verlust des Gegenions selbstvernetzenden Charakter erhalten und dadurch nach erfolgter Vernetzung ihre Hydrophilie verlieren. Darüber hinaus sind derartige Dispersionen auch mit anderen Vernetzern, z.B. Polyepoxiden, vernetzbar.

Nachteilig ist, daß der Einbau der hydrophilierenden Cyanharnstoffgruppen gemäß den oben zitierten Offenlegungsschriften eine Kettenabbruchreaktion ist. Dadurch wird das erreichbare Molekulargewicht der Polyurethane durch die Menge der zur Dispergierung erforderlichen Cyanharnstoffgruppen limitiert. Dies kann im Extremfall dazu führen, daß bei sehr feinteiligen Dispersionen, die einen hohen Gehalt hydrophilierender Gruppen erfordern, das erreichbare Molekulargewicht so niedrig ist, daß diese Produkte nicht mehr filmbildend sind. Gerade feinteilige PUR-Dispersionen haben aber den verarbeitungstechnischen Vorteil eines guten Verlaufs und bei entsprechender Molmasse einer hervorragenden Filmbildung.

Im Gegensatz dazu werden bei carboxylat- und/oder sulfonat-modifizierten Polyurethanen bzw. Polyurethanharnstoffen Aufbaukomponenten eingesetzt, die diese hydrophilierenden Carboxylat- und/oder Sulfonatgruppen seitenständig eingebaut enthalten und die im Sinne der Polyurethanchemie streng difunktionell sind. Dadurch gelingt es, Kettenaufbau und Hydrophilierung zu entkoppeln. Direkte Folge davon ist, daß nahezu jede gewünschte Molmasse eingestellt werden kann. Die hydrophilierenden Gruppen liegen bei derartigen Polyurethanen seitenständig vor.

Aufgabe der vorliegenden Erfindung war es, anionisch modifizierte Polyharnstoffe zur Verfügung zu stellen, die den Vorteil beider Typen, nämlich einerseits Verwendung von nach Auftrocknung selbstvernetzenden Hydrophilierungskomponenten und andererseits Entkopplung der Hydrophilierung vom Kettenaufbau, vereinigen und bei denen die Nachteile, wie latente Hydrophilie und Abhängigkeit der Molmasse von der Menge der eingesetzten Hydrophilierungskomponente, vermieden werden.

Diese Aufgabe wurde mit der nachstehend beschriebenen Erfindung gelöst.

Die vorliegende Erfindung betrifft neue, anionisch modifizierte Polyharnstoffe auf Basis von
la) organischen Polyisocyanaten und
   11) polyfunktionellen NCO-reaktiven Verbindungen aus der Reihe
      b) Polyhydroxylverbindungen,
      c) Polyamine,
      d) Aminoalkohole,

      und gegebenenfalls
111) monofunktionellen NCO-reaktiven Verbindungen e) und gegebenenfalls
IV) Wasser f), die in die Polymerkette eingebaute anionische N-Cyanaminocarbonylharnstoffgruppen der Formel (I) 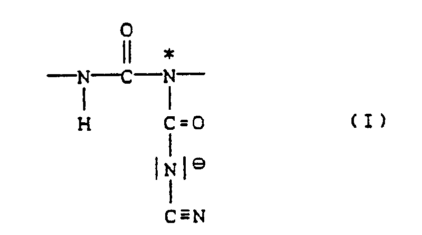 wobei die freie Valent an N im statistischen Mittel durch einen Rest mit einem mittleren Molekulargewicht von über 500 verbunden ist, und gegebenenfalls endständige anionische Cyanharnstoffgruppen der Formel (II) 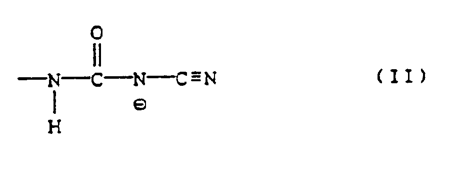 enthalten, wobei das Verhältnis von eingebauten Gruppen (I) zu endständigen Gruppen (II) mehr als 1:1, vorzugsweise mehr als 2:1, beträgt.

Vorzugsweise enthalten die erfindungsgemäßen Polyharnstoffe 5 bis 100, insbesondere 10 bis 35 Milliäquivalente N-Cyanaminocarbonylharnstoffgruppen (I) und vorzugweise weniger als 50, insbesondere weniger als 35, besonders bevorzugt weniger als 5 und ganz besonders bevorzugt weniger als 3,5 Milliäquivalente Cyanharnstoffgruppen (II), jeweils bezogen auf 100 g modifizierten Polyharnstoff.

Unter dem Begriff "in die Polymerkette eingebaute" Gruppen im Gegensatz zu dem Begriff "endständige" Gruppen sollen solche Gruppen der Formel (I) verstanden werden, bei denen die freie Valenz an N^{*} in Formel (I) im statistischen Mittel durch einen Rest mit einem mittleren Molekulargewicht größer als 500, vorzugsweise größer als 1000, insbesondere größer als 1500, verbunden ist.

Die vorliegende Erfindung betrifft weiterhin ein Verfahren zur Herstellung der erfindungsgemäßen Polyharnstoffe, dadurch gekennzeichnet, daß ein Polyharnstoff, der Oxadiazintrion-Struktureinheiten der Formel (III) 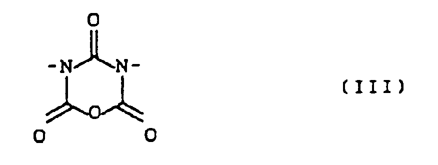 und/oder Uretdion-Struktureinheiten der Formel (IV) 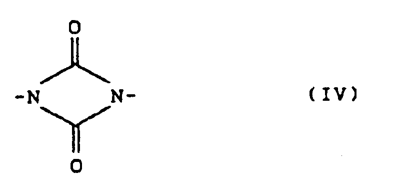 enthält, mit einem Cyanamidsalz der Formel (V) 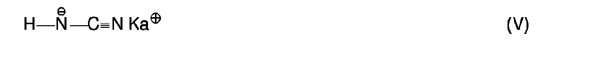 worin
Ka^{$} für ein Alkali- oder ein gegebenenfalls substituiertes Ammoniumion steht,
umgesetzt wird.

Zwar wird bereits in der oben genannten DE-OS 3 441 934 eine Mitverwendung von Diisocyanaten mit Oxadiazintrion- bzw. Uretdionstrukturen zum Aufbau von Polyisocyanat-Additionsprodukten erwähnt. Da in dieser Offenlegungsschrift diese Strukturen als inert gegenüber Cyanamidsalzen bezeichnet werden (S. 12), konnte diesem Stand der Technik jedoch kein Hinweis zur Lösung des oben beschriebenen Problems - nämlich Einführung von hydrophilierenden, vernetzbaren Gruppen ohne Verlust von Isocyanatgruppen - entnommen werden, insbesondere deshalb, weil nach dieser Offenlegungsschrift die gewünschte Hydrophilierung durch endständige Cyanharnstoffgruppen erreicht wird. Selbst unter der Annahme, die Oxadiazintrion- beziehungsweise Uretdioneinheiten der Produkte gemäß DE-OS 3 441 934 hätten zu in die Kette eingebauten N-Cyanminocarbonylharnstoffgruppen (I) reagiert, werden die anspruchsgemäßen Mengen und das anspruchsgemäße Verhältnis I/II nicht erreicht.

Auch ist es ausgesprochen überraschend, daß Polyisocyanatprepolymere mit Oxadiazintrion- bzw. Uretdionstruktur mit Aminen kettenverlängert werden können, ohne daß diese Einheiten nennenswert mitreagieren. Laut DE-OS 3 232 736 sind nämlich Uretdionstrukturen schon bei Temperaturen unter 50°C gegen aliphatische Amine reaktiv. Oxadiazintrione reagieren mit aliphatischen Amine schon unterhalb Raumtemperatur nahezu momentan unter Biuretbildung (Bull. Soc. Chim. France 1972, 242-51, ibid. 1974, 1497-1505). Dieses Verhalten kann zur Vernetzung von Polyurethanen mit Oxadiazintrioneinheiten in der Polymerkette durch Umsetzung mit Diaminen verwendet werden (US-PS 4 546 153). Es hätte daher erwartet werden müssen, daß beim Versuch der Kettenverlängerung mit Diaminen Vernetzung der Isocyanatprepolymeren eintritt, so daß die Ansätze unbrauchbar werden.

Die für die Herstellung der erfindungsgemäß modifizierten Polyharnstoffe geeigneten unmodifizierten Polyharnstoffe können über ein Prepolymerisat hergestellt werden, wonach man zunächst aus den Komponenten a), höhermolekularen und gegebenenfalls niedermolekularen Komponenten b), c) und/oder d) ein NCO-Prepolymerisat mit einem NCO-Gehalt von 0,5 bis 10, vorzugsweise 1,5 bis 7,5 Gew.-% herstellt und dieses mit niedermolekularen Verbindungen b), c), d) und/oder f) Wasser umsetzt.

Nach einer bevorzugten Ausführungsform werden die für die Herstellung der erfindungsgemäßen modifizierten Polyharnstoffe geeigneten unmodifizierten Polyharnstoffe durch Kettenverlängerung eines NCO-Prepolymerisats mit niedermolekularen Verbindungen aus der Reihe Polyamine und Aminoalkohole bis zu einem Umsatz der NCO-Gruppen des Prepolymerisats von 30 - 95, vorzugsweise 50 bis 80 % und anschließende Kettenverlängerung mit Wasser hergestellt.

Bei der Herstellung des NCO-Prepolymers werden als Aufbaukomponenten a) zur Einführung der Oxadiazintrion-und/oder Uretdion-Struktureinheiten der Formeln (111) bzw. (IV) Diisocyanate der Formeln (VI) und/oder (VII) 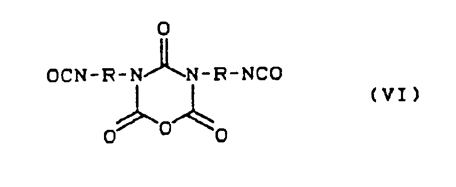 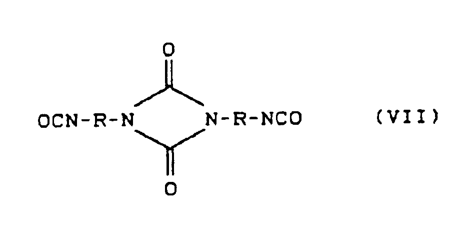 worin
R unabhängig voneinander für den zweiwertigen Rest eines aliphatischen Kohlenwasserstoffs mit 1 bis 15 C-Atomen, eines cycloaliphatischen Kohlenwasserstoffs mit 3 bis 15 C-Atomen, eines araliphatischen Kohlenwasserstoffs mit 7 bis 15 C-Atomen oder eines aromatischen Kohlenwasserstoffs mit 6 bis 12 C-Atomen steht, mitverwendet, wobei deren Menge so bemessen wird, daß der resultierende Polyharnstoff vor der Umsetzung mit den Cyanamidsalzen (V) einen Gehalt von 5 bis 180, vorzugsweise 15 bis 100 Milliäquivalenten an reaktiven Gruppen der Formeln (III) und/oder (IV), bezogen auf 100 g unmodifizierten Polyharnstoff, aufweist.

Die Reaktion von Cyanamidsalzen (V) mit den Oxadiazintrion-bzw. Uretdionstrukturen der Formeln (III) bzw. (IV) kann durch folgendes Reaktionsschema dargestellt werden: 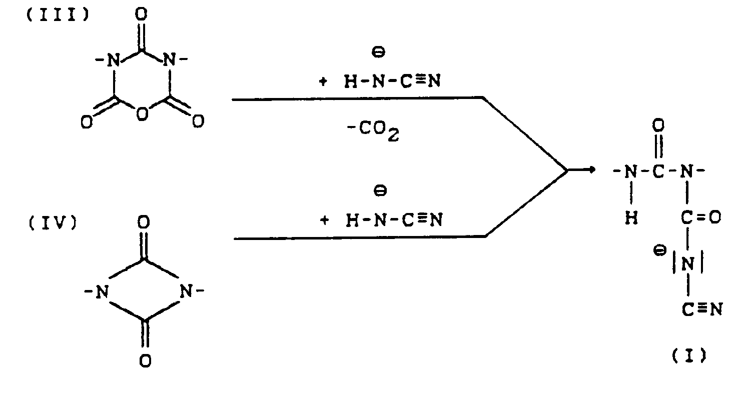 Die unter a) als Aufbaukomponenten verwendeten Diisocyanate der Formeln (VI) und (VII) sind unter den Bedingungen der Prepolymerherstellung gegenüber Polyhydroxyl-Komponenten b) nur bezüglich der Isocyanatgruppen reaktiv, die Oxadiazintrion- bzw. die Uretdionstrukturen bleiben erhalten. Beispiele für derartige Polyisocyanate sind 1,3-Bis-(5-isocyanato-1,3,3-trimethyl-cyclohexyl-methylen)-2,4-dioxo-1,3-diazetidin; 1,3-Bis-(3-isocyanato-4-methylphenyl)-2,4-dioxo-1,3-diazetidin; 1,3-Bis-(6-isocyanato-hexyl)-2,4-dioxo-1,3-diazetidin; 3,5-Bis-(5-isocyanato-1,3,3-trimethyl-cyclohexyl-methylen)-2,4,6-trioxo-tetrahydro-1,3,5-oxadiazin; 3,5-Bis-(4-isocyanato-cyclohexyl)-2,4,6-trioxo-tetrahydro-1,3,5-oxadiazin und 3,5-Bis-(6-isocyanato-hexyl)-2,4,6-trioxo-tetrahydro-1,3,5-oxadiazin (Desmodur@ LB 202, Bayer AG).

Von den Isocyanaten der Formeln (VI) und (VII) werden diejenigen der Oxadiazintrion-Reihe (VI) bevorzugt eingesetzt, besonders bevorzugt 3,5-Bis-(6-isocyanato-hexyl)-2,4,6-trioxo-tetrahydro-1,3,5-oxadiazin. Die Polyisocyanate der Formel (VI) und (VI sind z.T. technische Produkte. Bei diesen kann die Isocyanatfunktionalität größer als zwei sein und das Molekulargewicht kann über dem für Reinstoffe geltenden Wert liegen. Diese technischen Produkte können selbstverständlich bei der Durchführung des erfindungsgemäßen Verfahrens eingesetzt werden. Zur Vermeidung einer unerwünschten Vernetzung kann es gegebenenfalls erforderlich sein, in an sich bekannter Weise durch Mitverwendung von monofunktionellen NCO-reaktiven Komponenten, wie z. B. Monoolen, bei der NCO-Prepolymerherstellung diese erhöhte Funktionalität auszugleichen.

Weiterhin sind als Aufbaukomponenten a) beliebige organische Verbindungen geeignet, die mindestens zwei freie Isocyanatgruppen pro Molekül aufweisen. Vorzugsweise werden Diisocyanate X(NCO)₂ eingesetzt, wobei

X für einen zweiwertigen aliphatischen Kohlenwasserstoffrest mit 4 bis 12 Kohlenstoffatomen, einen zweiwertigen cycloaliphatischen Kohlenwasserstoffrest mit 6 bis 15 Kohlenstoffatomen, einen zweiwertigen aromatischen Kohlenwasserstoffrest mit 6 bis 15 Kohlenstoffatomen oder einen zweiwertigen araliphatischen Kohlenwasserstoffrest mit 7 bis 15 Kohlenstoffatomen steht.

Beispiele derartiger bevorzugt einzusetzender Diisocyanate sind Tetramethylendiisocyanat, Methylpentamethylendiisocyanat, Hexamethylendiisocyanat, Dodecamethylendiisocyanat, 1,4-Diisocyanato-cyclohexan, 1-lsocyanato-3,3,5-trimethyl-5-isocyanatomethyl-cyclohexan, 4,4'-Diisocyanato-dicyclohexyl-methan, 4,4'-Diisocyanato-dicyclohexylpropan-(2,2), 1,4-Diisocyanatobenzol, 2,4-Diisocyanatotoluol, 2,6-Diisocyanatotoluol, 4,4'-Diisocyanato-diphenylmethan, 2,2'- und 2,4'-Diisocyanato-diphenylmethan, p-Xylylendiisocyanat, p-Isopropylidendiisocyanat, sowie aus diesen Verbindungen bestehende Gemische.

Es ist selbstverständlich auch möglich, die in der Polyurethanchemie an sich bekannten höherfunktionellen Polyisocyanate oder auch an sich bekannte modifizierte, beispielsweise Carbodiimidgruppen, Allophanatgruppen, Isocyanuratgruppen, Urethangruppen und/oder Biuretgruppen aufweisende Polyisocyanate anteilig (mit)zuverwenden.

"Polyfunktionelle NCO-reaktive Verbindungen" im Sinne der Erfindung sind solche Verbindungen, die pro Molekül durchschnittlich 1,8 bis 4, vorzugsweise 1,8 bis 2,5 NCO-reaktive Gruppen aufweisen, wobei als NCO-reaktive Gruppen hauptsächlich Hydroxylgruppen und primäre und sekundäre Aminogruppen in Frage kommen.

Als Polyhydroxylverbindungen b) werden bevorzugt höhermolekulare Verbindungen aus den Klassen der Polyester- , Polyesteramid-, Polycarbonat-, Polyacetal- und Polyetherpolyole mit Molekulargewichten von mindestens 500, bevorzugt 500 bis 8 000, besonders bevorzugt 800 bis 5 000, eingesetzt.

Als Polyesterpolyole kommen insbesondere lineare Polyesterdiole oder auch schwach verzweigte Polyesterpolyole in Betracht, wie sie in bekannter Weise aus aliphatischen, cycloaliphatischen oder aromatischen Di- bzw. Polycarbonsäuren bzw. ihren Anhydriden wie z.B. Bernstein-, Glutar-, Adipin-, Pimelin-, Kork-, Azelain-, Sebacin-, Nonandicarbon- , Decandicarbon-, Terephthal-, Isophthal-, o-Phthal-, Tetrahydrophthal-, Hexahydrophthal- oder Trimellitsäure sowie Säureanhydride wie o-Phthal-, Trimellit- oder Bernsteinsäureanhydrid oder deren Gemisch mit mehrwertigen Alkoholen wie z.B. Ethandiol, Di-, Tri-, Tetraethylenglykol, 1,2-Propandiol, Di-, Tri-, Tetrapropylenglykol, 1,3-Propandiol, Butandiol-1,4, Butandiol-1,3, Butandiol-2,3, Pentandiol-1,5, Hexandiol-1,6, 2,2-Dimethyl-1,3-propandiol, 1,4-Dihydroxycyclohexan, 1,4-Dimethylolcyclohexan, Octandiol-1,8, Decandiol-1,10, Dodecandiol-1,12 oder deren Gemische gegebenenfalls unter Mitverwendung höherfunktioneller Polyole wie Trimethylolpropan oder Glycerin hergestellt werden können. Als mehrwertige Alkohole zur Herstellung der Polyesterpolyole kommen natürlich auch cycloaliphatische und/oder aromatische Di- und Polyhydroxylverbindungen in Frage. Anstelleder freien Polycarbonsäuren können aud die entsprechenden Polycarbonsäureanhydride oder entsprechende Polycarbonsäureester von niedrigen Alkoholen oder deren Gemische zur Herstellung der Polyester verwendet werden.

Selbstverständlich kann es sich bei den Polyesterpolyolen auch um Homo- oder Mischpolymerisate von Lactonen handeln, die vorzugsweise durch Anlagerung von Lactonen bzw. Lactongemischen wie Butyrolacton, _{£}-Caprolacton und/oder Methyl-_{E}-caprolacton an geeignete di- und/oder höherfunktionelle Startermoleküle, wie z.B. die vorstehend als Aufbaukomponenten für Polyesterpolyole genannten niedermolekularen, mehrwertigen Alkohole, erhalten werden. Die entsprechenden Polymerisate des ^{g-}Caprolactons sind besonders bevorzugt.

Auch Hydroxylgruppen aufweisenden Polycarbonate kommen als Polyhydroxylkomponenten b) in Betracht, z.B. solche, die durch Umsetzung von Diolen wie 1,4-Butandiol und/oder 1,6-Hexandiol mit Diarylcarbonaten, z.B. Diphenylcarbonat, oder Phosgen hergestellt werden können.

Als Polyetherpolyole seien z.B. die Polyadditionsprodukte der Styroloxide, des Ethylenoxid, Propylenoxid, Tetrahydrofuran, Butylenoxid, Epichlorhydrins, sowie ihre Mischadditions- und Pfropfprodukte, sowie die durch Kondensation von mehrwertigen Alkoholen oder Mischungen derselben und die durch Alkoxylierung von mehrwertigen Alkoholen, Aminen und Aminoalkoholen gewonnenen Polyetherpolyole genannt.

Selbstverständlich können auch Mischungen der oben beispielhaft aufgeführten Verbindungen als Aufbaukomponenten b) Verwendung finden.

Weiterhin können als Komponenten b) gegebenenfalls auch niedermolekulare Polyhydroxylverbindungen, bevorzugt Diole des Molekulargewichtsbereichs 62 bis 499, verwendet werden. Es kommen als solche beispielsweise die unter b) zur Herstellung der Polyesterpolyole genannten mehrwertigen, insbesondere zweiwertigen Alkohole sowie weiterhin niedermolekulare Polyesterdiole wie z.B. Adipinsäure-bis-(hydroxyethyl)-ester oder kurzkettige auf aromatischen Diolen gestartete Homo- und Mischadditionsprodukte des Ethylenoxid oder des Propylenoxid in Frage. Beispiele für aromatische Diole, die als Starter für kurzkettige Homo- und Mischpolymerisate des Ethylenoxid oder des Propylenoxid Verwendung finden können, sind z.B. 1,4-, 1,3-, 1,2-Dihydroxybenzol oder 2,2-Bis-(4-hydroxyphenyl)-propan (Bisphenol A).

Diese Verbindungen werden zweckmäßig schon bei der Herstellung des NCO-Prepolymeren eingesetzt.

Zur Erzielung spezieller Effekte, beispielsweise zur Regelung des Molekulargewichts, können als Aufbaukomponenten monofunktionelle NCO-reaktive Verbindungen e) gegebenenfalls mitverwendet werden. Diese monofunktionellen Verbindungen e) werden selbstverständlich in solchen Mengen eingesetzt, die den Eigenschaften der Endprodukte nicht abträglich sind. Als Beispiele solcher monofunktionellen Verbindungen e) kommen Ammoniak, Monoamine und einwertige Alkohole in Frage. Bevorzugte Monoamine sind z. B. Diethyl- und Dibutylamin. Bevorzugte einwertige Alkohole sind z.B. monofunktionelle Polyetheralkohole, insbesondere hydrophile Ethylenoxid-Homo- und -Co-additionsprodukte, vorzugsweise solche mit einem Gehalt an eingebauten Ethylenoxideinheiten, der dem erfindungsgemäßen modifizierten Polyharnstoff einen Gehalt an eingebauten Ethylenoxideinheiten von bis zu 30, insbesondere bis zu 10 Gew.-% verleiht. Der Einbau derartiger monofunktioneller Polyetheralkohole erfolgt zweckmäßigerweise bei der Prepolymerherstellung.

Beim Einsatz von Monoaminen e) als Kettenregler werden diese zweckmäßigerweise im Anschluß an die Kettenverlängerung mit Polyaminen c) eingesetzt. Dabei können diese Monoamine e) gegebenenfalls in bis zu den verbleibenden NCO-Gruppen rechnerisch äquivalenter Menge eingesetzt werden.

Als Aufbaukomponenten c) kommen aliphatische und/oder alicyclische primäre und/oder sekundäre Polyamine in Frage, beispielhaft seien genannt: 1,2-Ethandiamin, 1,6-Hexamethylendiamin, 1 -Amino-3,3,5-trimethyl-5-aminomethyl- cyclohexan (Isophorondiamin), Piperazin, 1,4-Diaminocyclohexan, Bis-(4-aminocyclohexyl)-methan, Adipinsäuredihydrazid oder Diethylentriamin.

Weitere bevorzugte Polyamine c) umfassen Polyetherpolyamine, die formal durch Ersatz der Hydroxylgruppen der oben beschriebenen Polyetherpolyole b) durch Aminogruppen zustandekommen. Solche Polyetherpolyamine kann man durch Umsetzung der entsprechenden Polyetherpolyole mit Ammoniak und/oder primären Aminen herstellen.

Bevorzugt als Aufbaukomponente c) ist auch Hydrazin bzw. Hydrazinhydrat.

Als Aufbaukomponenten d) können gegebenenfalls auch Aminoalkohole, wie z.B. Ethanolamin, 2-Propanolamin, Diethanolamin oder N-(2-Hydroxyethyl)-ethylendiamin, Verwendung finden.

Auch durch Reaktion erfindungsgemäßer Prepolymerer mit Wasser f) zur Kettenverlängerung können erfindungsgemäße hochmolekulare Polyharnstoffe erhalten werden.

Die genannten Aufbaukomponenten a) bis d) können gegebenenfalls auch anionische Carboxylat- und/oder Sulfonat-Gruppen enthalten und können in dieser modifizierten Form zumindest anteilig mitverwendet werden. Solche Aufbaukomponenten und deren Verwendung zur Herstellung anionischer Polyurethane beziehungsweise Polyharnstoffe werden beispielsweise in Methoden der Organischen Chemie (Houben-Weyl), Bd. E 20, Thieme Verlag, Stuttgart 1989, S. 1659 ff. beschrieben.

Da jedoch durch diese modifizierten Aufbaukomponenten die Hydrophilie der Produkte nach dem Auftrocknen erhöht wird, ist eine Mitverwendung derartiger Aufbaukomponenten nur dann erwünscht, wenn durch ihre Mitverwendung, z.B. durch Synergieeffekte, die Gesamtmenge an hydrophilen Zentren im Produkt vermindert wird.

Selbstverständlich können auch in der Polyurethanchemie übliche Hilfs- und Zusatzstoffe, z.B. Katalysatoren, wie z.B. tertiäre Amine, metallorganische Verbindungen, organische Zinn-Verbindungen oder organische Titan-Verbindungen, weiterhin übliche Emulgatoren, Antioxidationsmittel oder Hydrolyseschutzmittel zu jedem beliebigen Zeitpunkt während der Herstellung der erfindungsgemäßen Polyharnstoffe zugesetzt werden.

Die Kettenverlängerung der NCO-Prepolymeren mit den Polyaminen c) erfolgt im allgemeinen bei Temperaturen zwischen 20 und 70°C, vorzugsweise bei 30 bis 60°C.

Die verbleibenden Isocyanatgruppen reagieren sofort oder im Verlauf der nachfolgenden Schritte unter Harnstoffbildung mit Wasser f), beziehungsweise nehmen in geringem Umfang an der Umsetzung mit Salzen des Cyanamids unter Bildung von Cyanharnstoffanionen (IV) teil, deren Gehalt vorzugsweise jedoch weniger als 5 Milliäquivalenten, bezogen auf 100 g modifizierten Polyharnstoff beträgt.

Die Reaktionszeit kann zwischen wenigen Minuten bis zu einigen Stunden variieren. Insbesondere bei längeren Reaktionszeiten wird ein Großteil der verbleibenden Isocyanatgruppen durch Wasser unter Kettenverlängerung umgesetzt, so daß die Bildung von Cyanharnstoffanionen (IV) minimiert wird.

Vorzugsweise werden die NCO-Prepolymeren vor der Umsetzung mit c) mit wassermischbaren, isocyanatunreaktiven, niedrig siedenden Lösemitteln verdünnt.

Als Verdünnungsmittel für die NCO-Prepolymeren kommen z.B. Lösemittel aus den Reihen der cyclischen Ether und offenkettigen Ketone, bevorzugt mit Siedepunkten unter 100°C in Frage, z.B. Tetrahydrofuran, Butanon, Aceton, besonders bevorzugt ist Aceton. Die Prepolymere werden derartig verdünnt, daß 20 bis 70 gew.-%ige, bevorzugt 30 bis 50 gew.-%ige Lösungen entstehen.

Die Polyamine c) werden im allgemeinen in verdünnter organischer, vorzugsweise verdünnter wäßriger Lösung eingesetzt.

Dabei kann die Konzentration der Amin-Lösung in weiten Grenzen variiert werden. Bei der Verwendung von in Wasser gelösten Aminen ist jedoch darauf zu achten, daß die Kettenverlängerungsreaktion in homogener Phase abläuft. Wenn die Amine c) in organischer Lösung eingesetzt werden, gelten die bereits für wäßrige Lösungen genannten Parameter bezüglich Konzentration, Reaktionstemperatur und Reaktionszeit. Als organisches Lösemittel ist Aceton bevorzugt. Im Falle der Mitverwendung von Monoaminen e) gelten ebenfalls die oben genannten Bedingungen.

Die Umsetzung mit Salzen des Cyanamids (V) kann nach verschiedenen Varianten erfolgen. Einerseits ist es möglich, zunächst das Cyanamid in Lösung, bevorzugt in wäßriger Lösung, zuzugeben und anschließend die zur Neutralisation des Cyanamids erforderliche Base als Reinsubstanz oder als Lösung zuzugeben. Andererseits kann aber auch das Cyanamidsalz in wäßriger oder organischer Lösung zugegeben werden. Bevorzugtes organisches Lösemittel ist Aceton.

Die Reaktionstemperatur wird im allgemeinen zwischen 20 und 80°C, bevorzugt zwischen 30 und 60°C gehalten. Die Menge an eingesetztem Cyanamidsalz (V) beträgt zwischen 50 und 100 %, bevorzugt zwischen 70 und 95 % der Äquivalenzmenge, bezogen auf Gesamtgehalt an reaktiven Gruppen (111) und/oder (IV) im Polyharnstoff. Nach der Umsetzung mit Cyanamidsalz (V) gegebenenfalls noch vorhandene reaktive Gruppen (111) und/oder (IV) können gegebenenfalls, wie in US 4 546 153 beschrieben, mit Aminen vernetzt werden. Die Reaktionszeit beträgt im allgemeinen zwischen wenigen Minuten und einigen Stunden. Im Falle der bevorzugten Oxadiazintrionstrukturen ist der Reaktionsverlauf leicht zu verfolgen. Die Reaktion ist abgeschlossen, wenn die Kohtendioxidentwicktung beendet ist. Falls wäßrig gearbeitet wird, sollte die Wassermenge so bemessen sein, daß das Reaktionssystem einphasig bleibt; jedoch ist dies weniger kritisch zu sehen, als bei der Kettenverlängerungsreaktion; eine beginnende Zweiphasigkeit kann eventuell toleriert werden.

Zur Neutralisation des Cyanamids sind sowohl anorganische Basen, wie z.B. Ammoniak, Natriumhydroxid oder - carbonat als auch organische, wie z.B. tertiäre oder ternäre Amine, wie z.B. Triethylamin, Trimethylamin, Trisisopropylamin, Tri-n-butylamin, N,N-Dimethylaminoethanol, Trisisopropanolamin, Pyridin oder N-Methylmorpholin einsetzbar. Bevorzugt sind flüchtige Basen, insbesondere Ammoniak und Triethylamin.

Nach Beendigung der Umsetzung mit den Cyanamidsalzen (V) kann das erhaltene Reaktionsprodukt durch Verdünnen mit Wasser und destillativer Entfernung der eingesetzten organischen Lösungsmittel in eine Dispersion überführt werden.

Zur Herstellung der NCO-Prepolymeren sind prinzipiell alle in der PUR-Chemie bekannten Varianten möglich, so daß gewünschte Hart- und Weichsegmentlängen und Verteilungen zwanglos eingestellt werden können.

Die erfindungsgemäßen Polyharnstoffe können als Bindemittel für Beschichtungen Verwendung finden und sind insbesondere in Form ihrer wäßrigen Dispersionen zur Beschichtung von Flächengebilden, insbesondere von Leder oder Textilien, Holz, Kunststoffen, Papier, metallischen und mineralischen Substraten geeignet.

Diese Beschichtung kann nach an sich bekannten Verfahren, beispielsweise durch Aufspritzen, Rakeln oder durch Drucken erfolgen. Die Mitverwendung üblicher Hilfs- und Zusatzstoffe, wie z.B. nichtionischen und/oder anionischen Verdickern, Pigmenten, Wachsen, Griffmitteln und Farbstoffen, ist möglich. Es ist ebenfalls möglich, die erfindungsgemäßen Dispersionen mit anderen anionischen und/oder nichtionischen Dispersionen wie z.B. Butadien-, Acrylat- oder Polyurethan-Latices zu mischen. Für kationische Dispersionen gelten die dem Fachmann bekannten Einschränkungen und Vorsichtsmaßnahmen.

Obwohl die erfindungsgemäßen Polyharnstoffe nach dem Auftrocknen wenig hydrophil sind, kann es vorteilhaft sein, eine zusätzliche Vernetzung vorzunehmen. Als Vernetzungsmittel sind wasserlösliche oder wasserdispergierbare Verbindungen, wie z.B. Polyisocyanate, Polyepoxide, Polycarbodiimide oder Polyaziridine, wie siedem Stand der Technik entsprechen, geeignet. Auch Formaldehyd bzw. Melamin/Formaldehyd-Umsetzungsprodukte gegebenenfalls in veretherter Form sind als Vernetzer für die erfindungsgemäßen Polyharnstoffe einsetzbar.

Die Prozentangaben der nachfolgenden Beispiele - die Dehnungswerte ausgenommen - beziehen sich auf das Gewicht.

Die Bestimmung der mittleren Teilchengrößen (angegeben ist das Zahlenmittel) der Polyharnstoff-Dispersionen erfolgte mittels Laserkorrelations-Spektroskopie (Gerät: Malvern Autosizer 11, Malver Inst. Limited).

Die angegebenen Viskositäten verstehen sich als Auslaufzeiten, gemessen gemäß DIN 53 211 im DIN-Becher 4 mm.

### Beispiel 1

2240 g eines difunktionelle Hexandiolpolycarbonatdiols (OH-Z = 56) und 178 g eines monofunktionellen, ethylenoxidreichen Polyethers (78 % Ethylenoxidgehalt, OH-Z = 26) werden bei 120°C, 15 mbar entwässert. Bei 80°C werden 336,4 g 3,5-Bis-(6-isocyanatohexyl)-2,4,6-trioxotetrahydro-1,3,5-oxadiazin (technisches Produkt, MG = 453,6), 200,9 g Hexamethylendiisocyanat und 442,4 g Isophorondiisocyanat zugegeben. Man läßt 1 h bei 80°C reagieren und gibt dann 94,8 g Butandiol-1,4 zu. Nach 90 min wird das Prepolymer mit 6500 g Aceton verdünnt. Zu dieser Lösung gibt man 36,0 g Ethylendiamin und 25,0 g Hydrazinhydrat in 500 g Wasser und rührt 7 min bei 50°C nach. Danach wird eine Lösung von 33,6 g Cyanamid und 80,7 g Triethylamin in 300 g Aceton zugegeben. Nach 60 min ist die CO_{z}-Entwickiung beendet. Der Ansatz wird mit 8600 g Wasser verdünnt und anschließend das Aceton unter vermindertem Druck abdestilliert.

Es resultiert eine feinteilige Dispersion mit einer mittleren Teilchengröße der dispersen Phase von ca. 73 nm, einem Feststoffgehalt von 31,4 % und einer Auslaufviskosität von 12,5 s.

### Beispiel 2

2240 g eines difunktionellen Hexandiolpolycarbonatdiols (OH-Z = 56), 82 g eines difunktionellen Propylenoxidpolyethers (OH-Z = 56) und 95 g Butandiol-1,4 werden bei 120°C, 15 mbar entwässert. Bei 80°C werden 363,0 g 3,5-Bis-(6-isocyanato-hexyl)-2,4,6-trioxo-tetrahydro-1,3,5-oxadiazin (technisches Produkt, MG = 422,0), 200,9 g Hexamethylendiisocyanat und 422,0 g Isophorondiisocyanat zugegeben. Nach 4 h bei 80°C wird das Prepolymer mit 7 000 g Aceton verdünnt. Zu dieser Lösung gibt man 36,0 g Ethylendiamin und 25,0 g Hydrazinhydrat in 500 g Wasser und rührt 20 min bei 45°C nach. Danach wird eine Lösung von 33,6 g Cyanamid in 400 g Wasser zugegeben. Weitere 20 min später werden 80,7 g Triethylamin zugegeben. Nach 60 min ist die CO_{z}-Entwickiung beendet. Der Ansatz wird mit 8 000 g Wasser verdünnt und anschließend das Aceton unter vermindertem Druck abdestilliert.

Es resultiert eine feinteilige Dispersion mit einer mittleren Teilchengröße der dispersen Phase von ca. 71 nm, einem Feststoffgehalt von 34,5 % und einer Auslaufviskosität von 13 s.

Ein aus der Dispersion gerakelter Film hat eine Shore A-Härte (DIN 53 505) von 85, einen Spannungswert bei 100 % Dehnung (DIN 53 504) von 6,4 MPa, eine Bruchspannung von 25,1 MPa bei einer Bruchdehnung von 350 %.

Durch Verdünnen mit Wasser und einer handelsüblichen Silicat-Mattierungsmittel (9,0 % SiO_{z}) wird ein Ansatz mit 12 % PUR-Feststoff und 1,8 % Si0₂ hergestellt. Damit wird ein schwarz grundiertes Möbelnappa durch Aufspritzen (ca. 5 g /0,25 Quadratfuß) appretiert. Die Appretur zeigt nach dem Trocknen eine Naßreibechtheit (Vesli c, DIN 53 339) von 1 850 Reibungen ohne Beschädigung der Appretur oder Anfärbung des Filzes.

### Beispiel 3

2 240 g eines difunktionellen Hexandiolpolycarbonatdiols (OH-Z = 56), 82 g eines difunktionellen Propylenoxidpolyethers (OH-Z = 56) werden bei 120°C 15 mbar entwässert. Bei 80°C werden 363,0 g 3,5-Bis-(6-isocyanatohexyl)-2,4,6-trioxo-tetrahydro-1,3,5-oxadiazin (technisches Produkt, MG = 422,0), 67,2 g Hexamethylendiisocyanat und 184,3 g Isophorondiisocyanat zugegeben. Nach 3 h bei 90°C wird das Prepolymer mit 6 000 g Aceton verdünnt. Zu dieser Lösung gibt man 18,0 g Ethylendiamin und 12,5 g Hydrazinhydrat in 300 g Wasser und rührt 15 min bei 50°C nach. Danach wird eine Lösung von 33,6 g Cyanamid in 400 g Wasser zugegeben. Weitere 20 min später werden 80,7 g Triethylamin zugegeben. Nach 45 min ist die CO₂-Entwicklung beendet. Der Ansatz wird mit 6 000 g Wasser verdünnt und anschließend das Aceton unter vermindertem Druck abdestilliert.

Es resultiert eine feinteilige Dispersion mit einer mittleren Teilchengröße der dispersen Phase von ca. 95 nm, einem Feststoffgehalt von 32,5 % und einer Auslaufviskosität von 12 s.

Ein aus der Dispersion gerakelter Film hat eine Shore A-Härte von 65, einen Spannungswert bei 100 % Dehnung von 2,9 MPa, eine Bruchspannung von 20,5 MPa bei einer Bruchdehnung von 580 %.

Es wird wie in Beispiel 2 ein Spritzansatz hergestellt und damit appretiert. Die Appretur zeigt nach dem Trocknen eine Naßreibechtheit (Veslic, DIN 53 339) von 1 800 Reibungen ohne Beschädigung der Appretur oder Anfärbung des Filzes.

### Beispiel 4

2 240 g eines difunktionellen Hexandiolpolycarbonatdiols (OH-Z = 56) und 178 g eines monofunktionellen, ethylenoxidreichen Polyethers (78 % Ethylenoxidgehalt, OH-Z = 26) und 95,0 g Butandiol-1,4 werden bei 120°C/15 mbar entwässert. Bei 80°C werden 363,0 g 3,5-Bis-(6-isocyanato-hexyl)-2,4,6-trioxo-tetrahydro-1,3,5-oxadiazin (technisches Produkt, MG = 422,0), 200,9 g Hexamethylendiisocyanat und 442,4 g Isophorondiisocyanat zugegeben. Man läßt 4 h bei 90°C reagieren. Das Prepolymer wird mit 6 500 g Aceton verdünnt. Zu dieser Lösung gibt man 46,2 g Ethylendiamin und 32,0 g Hydrazinhydrat in 500 g Wasser und rührt 20 min bei 50°C nach. Dann gibt man weiterhin 90,4 g Dibutylamin in 200 g Aceton zu und rührt weitere 45 min nach. Zu der Lösung gibt man 33,6 g Cyanamid in 300 g Wasser und nach vollständiger Homogenisierung 80,7 g Triethylamin in 100 g Aceton. Nach 60 min ist die CO_{z}-Entwicklung beendet.

Der Ansatz wird mit 8 000 g Wasser verdünnt und anschließend das Aceton unter vermindertem Druck abdestilliert.

Es resultiert eine feinteilige Dispersion mit einer mittleren Teilchengröße der dispersen Phase von ca. 85 nm, einem Feststoffgehalt von 33,5 % und einer Auslaufviskosität von 14 s.

### Beispiel 5

2 240 g eines difunktionellen Hexandiolpolycarbonatdiols (OH-Z = 56) und 216 g eines monofunktionellen, ethylenoxidreichen Polyethers (78 % Ethylenoxidgehalt, OH-Z = 26) werden bei 120°C, 15 mbar entwässert. Bei 85°C werden 448,0 g eines technischen Polyisocyanates mit einem Isocyanatgehalt von 21 % und einem Gehalt von ca. 75 % 1,3-Bis-(6-isocyanato-hexyl)-2,4-dioxo-1,3-diazetidin (@Desmodur VP-LS 2550, Bayer AG), 155,0 g Hexamethylendiisocyanat und 442,4 g lsophorondiisocyanat zugegeben. Man läßt 1,5 h bei 85°C reagieren und gibt dann 94,8 g Butandiol-1,4 zu. Nach 1 h bei 100°C wird das Prepolymer mit 8 000 g Aceton verdünnt. Zu dieser Lösung gibt man 30,0 g Ethylendiamin und 25,0 g Hydrazinhydrat in 500 g Wasser und rührt 20 min bei 50°C nach. Anschließend gibt man 148 g Dibutylamin in 150 g Aceton zu und rührt weitere 15 min nach. Die Lösung wird anschließend mit einer Lösung von 40,0 g Cyanamid in 400 g Wasser versetzt. Nach vollständiger Homogenisierung gibt man 95,8 g TriethylamIn zu. Nach 40 min wird mit 6 400 g Wasser verdünnt und anschließend das Aceton unter vermindertem Druck abdestilliert.

Es resultiert eine feinteilige Dispersion mit einer mittleren Teilchengröße der dispersen Phase von ca. 90 nm, einem Feststoffgehalt von 41,4 % und einer Auslaufviskosität von 16 s.

## Patentansprüche

1. Anionisch modifizierte Polyharnstoffe auf Basis von
I. a) organischen Polyisocyanaten und
II. polyfunktionellen NCO-reaktiven Verbindungen aus der Reihe
b) Polyhydroxylverbindungen,
c) Polyamine,
d) Aminoalkohole
und gegebenenfalls
III. monofunktionellen NCO-reaktiven Verbindungen e) und gegebenenfalls
IV. Wasser f),
die in die Polymerkette eingebaute anionische N-Cyanaminocarbonylharnstoffgruppen der Formel (I) 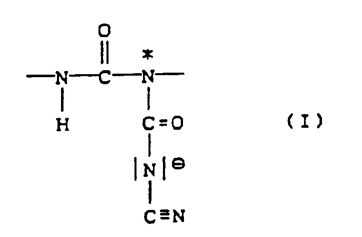 wobei die freie Valent an N^{*} im statistischen Mittel durch einen Rest mit einem mittleren Molekulargewicht von über 500 verbunden ist, und gegebenenfalls endständige anionische Cyanharnstoffgruppen der Formel (II) 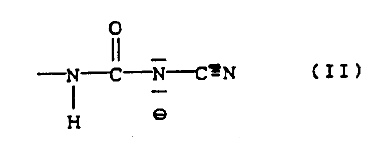 enthalten, wobei das Verhältnis von eingebauten Gruppen (I) zu endständigen Gruppen (II) mehr als 1:1 beträgt.

2. Polyharnstoffe nach Anspruch 1, wobei das Verhältnis von eingebauten Gruppen (I) zu endständigen Gruppen (II) mehr als 2:1 beträgt.

3. Polyharnstoffe nach Anspruch 1 enthaltend 10 bis 100 Milliäquivalente Gruppe (I) und weniger als 50 Milliäquivalente Gruppen (II) pro 100 g modifiziertem Polyharnstoff.

4. Verfahren zur Herstellung von Polyharnstoffen nach Anspruch 1, dadurch gekennzeichnet, daß ein Polyharnstoff, der Oxadiazintrion-Struktureinheiten der Formel (II) 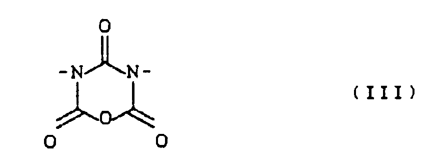 und/oder Uretdion-Struktureinheiten der Formel (IV) 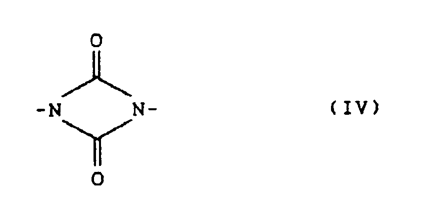 enthält, mit einem Cyanamidsalz der Formel (V) 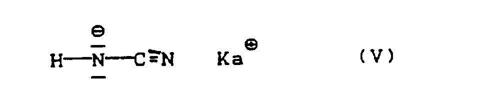 worin
Ka^{⊕} für ein Alkali- oder ein gegebenenfalls substituiertes Ammoniumion steht,
umgesetzt wird.

5. Verfahren nach Anspruch 4, wonach man als Aufbaukomponenten a) Diisocyanate der Formeln (VI) und/oder (VII) 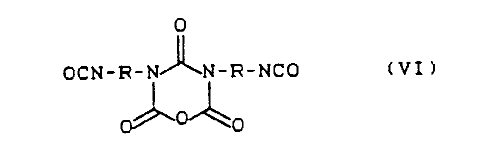 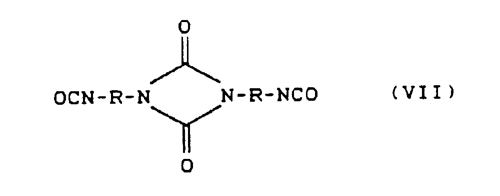 worin
R unabhängig voneinander für den zweiwertigen Rest eines aliphatischen Kohlenwasserstoffs mit 1 bis 15 C-Atomen, eines cycloaliphatischen Kohlenwasserstoffs mit 3 bis 15 C-Atomen, eines araliphatischen Kohlenwasserstoffs mit 7 bis 15 C-Atomen oder eines aromatischen Kohlenwasserstoffs mit 6 bis 12 C-Atomen steht,
mitverwendet, wobei deren Menge so bemessen wird, daß der resultierende Polyharnstoff vor der Umsetzung mit den Cyanamidsalzen (V) einen Gehalt von 5 bis 180, vorzugsweise 15 bis 100 Milliäquivalenten an reaktiven Gruppen der Formeln (III) und/oder (IV), bezogen auf 100 g unmodifizierten Polyharnstoff, aufweist.

6. Verfahren nach Anspruch 4, wonach zur Einführung der Gruppen III in den unmodifizierten Polyharnstoff als Aufbaukomponente a) der Formel (VI) 3,5-Bis-(6-isocyanato-hexyl)-2,4,6-trioxotetrahydro-1,3,5-oxadiazin mitverwendet wird.

7. Verfahren nach Anspruch 4, wonach man zunächst aus den Komponenten a), höhermolekularen und gegebenenfalls niedermolekularen Komponenten b), c) und/oder d) ein NCO-Prepolymerisat mit einem NCO-Gehalt von 0,5 bis 10 Gew.-% herstellt und dieses mit niedermolekularen Verbindungen b), c), d) und/oder f) Wasser umsetzt und schließlich das Reaktionsprodukt mit einem Cyanamidsalz der Formel (V) umsetzt.

8. Verfahren nach Anspruch 7, wonach das NCO-Prepolymerisat einen NCO-Gehalt von 1,5 bis 7,5 Gew.-% besitzt.

9. Verfahren nach Anspruch 4 durch Kettenverlängerung eines NCO-Prepolymerisats mit niedermolekularen Verbindungen aus der Reihe Polyamine und Aminoalkohole bis zu einem Umsatz der NCO-Gruppen des Prepolymerisats von 30 bis 95 % und anschließende Kettenverlängerung mit Wasser.

10. Verfahren nach Anspruch 9 unter Umsetzung der NCO-Gruppen des Prepolymerisats bis zu einem Umsatz von 50 bis 80 %.

11. Verwendung von Polyharnstoffen nach Ansprüchen 1 bis 3 als Bindemittel für Beschichtungen.

## Claims

1. Anionically modified polyureas based on
I. a) organic polyisocyanates and
II. polyfunctional NCO-reactive compounds from the series
b) polyhydroxy compounds,
c) polyamines,
d) aminoalcohols
and, optionally,
III. monofunctional NCO-reactive compounds e) and, optionally,
IV. water f),
which contain anionic N-cyanaminocarbonylurea groups of formula (I) 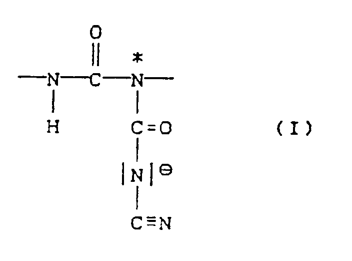 incorporated in the polymer chain, wherein the free valency on the 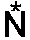 is linked on the statistical average by means of a group with a mean molecular weight of more than 500, and optionally terminal anionic cyanourea groups of formula (II), 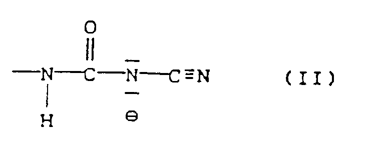 wherein the ratio of incorporated groups (I) to terminal groups (II) exceeds 1:1.

2. Polyureas according to Claim 1, wherein the ratio of incorporated groups (I) to terminal groups (II) exceeds 2:1.

3. Polyureas according to Claim 1 containing 10 to 100 milliequivalents groups (I) and less than 50 milliequivalents groups (II) per 100 g modified polyurea.

4. A process for the production of the polyureas according to Claim I, characterized in that a polyurea, containing oxadiazinetrione structural units of formula (III) 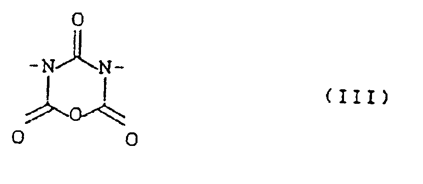 and/or uretdione structural units of formula (IV) 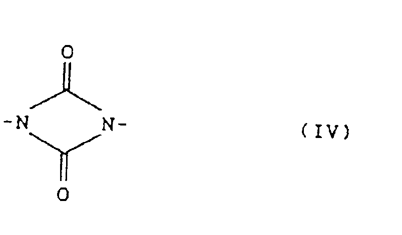 is reacted with a cyanamide salt of formula (V) 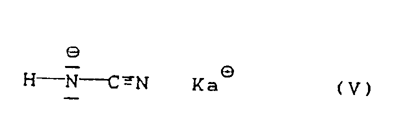 wherein
Ka⊕ represents an alkali metal ion or an optionally substituted ammonium ion.

5. A process according to Claim 4, wherein diisocyanates of formulae (VI) and/or (VII) 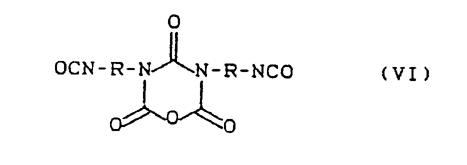 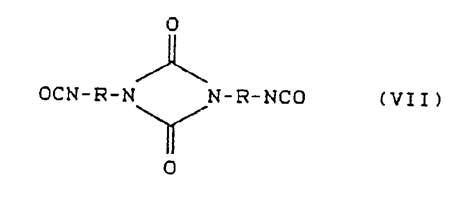 wherein
the R's independently of each other represent the difunctional radical of an aliphatic hydrocarbon having 1 to 15 carbon atoms, a cycloaliphatic hydrocarbon having 3 to 15 C atoms, an araliphatic hydrocarbon having 7 to 15 C atoms or an aromatic hydrocarbon having 6 to 12 C atoms,
are concomitantly used as synthesis components a), their amount being gauged in such a way that the resulting polyurea before the reaction with the cyanamide salts (V) has a content of 5 to 180, preferably 15 to 100, milliequivalents of reactive groups of formulae (II and/or (IV), based on 100 g unmodified polyurea.

6. A process according to Claim 4, wherein 3,5-bis-(6-isocyanatohexyl)-2,4,6-trioxotetrahydro-1,3,5-oxadiazine is concomitantly used as synthesis component a) of formula (VI) for the introduction of the groups (III) into the unmodified polyurea.

7. A process according to Claim 4, wherein an NCO prepolymer having an NCO content of 0.5 to 10 wt.% is initially prepared from component a), relatively high molecular weight and optionally low molecular weight components b), c) and/or d) and is then reacted with low molecular weight compounds b), c), d) and/or f) water and finally the reaction product is reacted with a cyanamide salt of formula (V).

8. A process according to Claim 7, wherein the NCO prepolymer has an NCO content of 1.5 to 7.5 wt.%.

9. A process according to Claim 4 by chain extension of an NCO prepolymer with low molecular weight compounds from the series of polyamines and aminoalcohols to a conversion of the NCO groups of the prepolymer of 30 to 95 % and subsequent chain extension with water.

10. A process according to Claim 9 with reaction of the NCO groups of the prepolymer to a conversion of 50 to 80 %.

11. The use of polyureas according to Claims 1 to 3 as binders for coatings.

## Revendications

1. Polyurées à modification anionique, à base de 1 a) des polyisocyanates organiques et
II) des composés polyfonetionnels réactifs avec les groupes NCO, des classes suivantes :
b) les composés polyhydroxylés,
c) les polyamines,
d) les aminoalcools,
et le cas échéant
III) des composés monofonctionnels réactifs avec les groupes NCO e) et le cas échéant
IV) l'eau f),
qui contiennent, incorporés dans la chaîne polymère, des groupes anioniques N-cyanaminocarbonylurée de formule 1 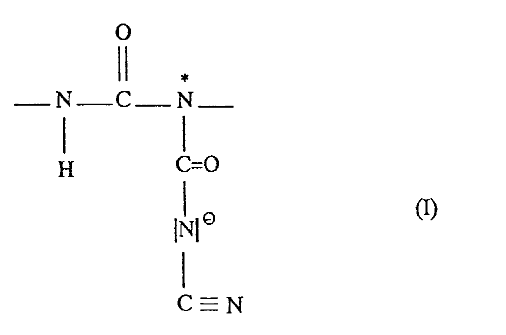 dans laquelle la valence libre de 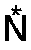 , en moyenne statistique, est reliée à un radical dont le poids équivalent moyen est supérieur à 500,
et le cas échéant des groupes anioniques cyanurée de formule II 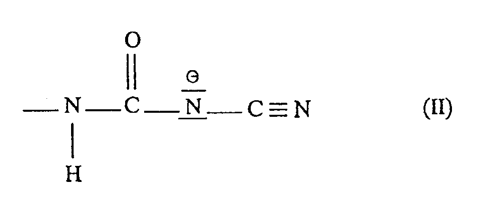 le rapport entre les groupes incorporés I et les groupes terminaux Il étant supérieur à 1:1.

2. Polyurées selon la revendication 1, dans lesquelles le rapport entre les groupes incorporés I et les groupes terminaux II est supérieur à 2: 1.

3. Polyurées selon la revendication 1, contenant 10 à 100 milliéquivalents du groupe I et moins de 50 milliéquivalents des groupes II pour 100 g de la polyurée modifiée.

4. Procédé de préparation des polyurées selon la revendication 1, caractérisé en ce que l'on fait réagir une polyurée contenant des motifs de structure oxadiazinetrione de formule III 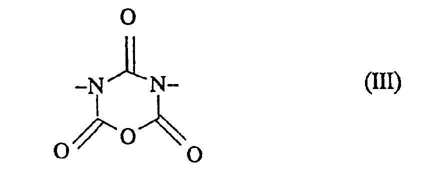 et/ou des motifs de structure uret-dione de formule IV 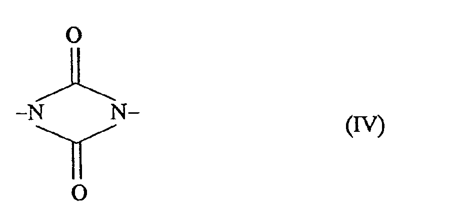 avec un sel de cyanamide de formule V 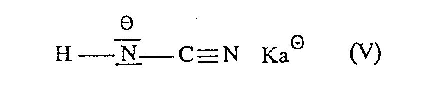 dans laquelle
Ka⊕ représente un ion alcalin ou un ion ammonium éventuellement substitué.

5. Procédé selon la revendication 4, dans lequel on utilise conjointement, en tant que composants de synthèse a), des diisocyanates de formules VI et/ou VI 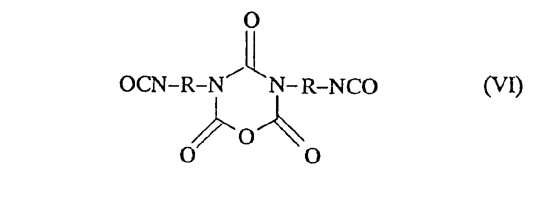 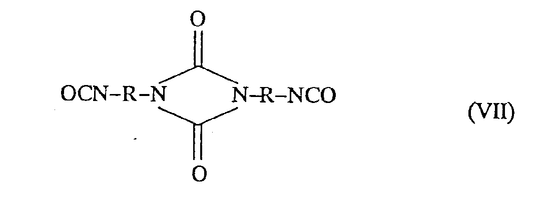 dans lesquelles
les symboles R, indépendamment les uns des autres, représentent chacun le radical divalent d'un hydrocarbure aliphatique en C₁-C₁₅, d'un hydrocarbure cycloaliphatique en C₃-C₁₅, d'un hydrocarbure araliphatique en C₇C₁₅ ou d'un hydrocarbure aromatique en C₆-C_{12'}
en quantité réglée en sorte que la polyurée obtenue, avant la réaction avec les sels de cyanamide V, contienne de 5 à 180, de préférence de 15 à 100 milliéquivalents de groupes réactifs de formules III et/ou IV pour 100 g de la polyurée non modifiée.

6. Procédé selon la revendication 4, dans lequel, pour introduire les groupes III dans la polyurée non modifiée, on utilise conjointement en tant que composant de synthèse a) de formule VI la 3,5-bis-(6-isocyanatohexyl)-2,4,6- trioxotétrahydro-1,3,5-oxadiazine.

7. Procédé selon la revendication 4, dans lequel on prépare d'abord, à partir des composants a), de composants b), e) et/ou d) à haut poids moléculaire et le cas échéant à bas poids moléculaire, un prépolymère à groupes NCO à une teneur en NCO de 0,5 à 10 % en poids qu'on fait réagir avec des composés à bas poids moléculaire b), c), d) et/ou f) : l'eau, après quoi, finalement, on fait réagir le produit de réaction avec un sel de cyanamide de formule V.

8. Procédé selon la revendication 7, dans lequel le prépolymère à groupes NCO contient 1,5 à 7,5 % en poids de NCO.

9. Procédé selon la revendication 4, dans lequel on allonge les chaînes d'un prépolymère à groupes NCO à l'aide de composés à bas poids moléculaire de la classe des polyamines et des aminoalcools jusqu'à un taux de conversion de 30 à 95 % des groupes NCO du prépolymère, après quoi on soumet à allongement des chaînes à l'aide d'eau.

10. Procédé selon la revendication 9, dans lequel on convertit les groupes NCO du prépolymère jusqu'à un taux de conversion de 50 à 80 %.

11. Utilisation des polyurées selon les revendications 1 à 3 en tant que liants pour des produits de revêtement.
